# EUROPÄISCHE PATENTANMELDUNG

(11) **EP 2 168 697 A1**
(43) Veröffentlichungstag der Anmeldung: **31.03.2010**
(21) Anmeldenummer: 08017160.6
(22) Anmeldetag: 30.09.2008
(51) Int. Cl.: B21K 1/56, F16B 25/10

(54) **Bohrschraubenherstellungsverfahren**

(71) Anmelder: MAGE AG, 1791 Courtaman (CH)
(72) Erfinder: Sponer, Wolfgang, 1230 Wien (AT); Cheng, Meng-Hsien, Sioushuei Township, Changhua County (TW)
(74) Vertreter: Kohler Schmid Möbus

(57) **Zusammenfassung**

Vorgeschlagen wird ein Verfahren zur Herstellung einer Bimetallbohrschraube mit einem Schraubenkörper 1, der einen sich an einen Schraubenkopf 6 anschließenden Schaft 7 aufweist, und einem Vorderteil 2 am schraubenkopffernen Ende des Schaftes 7, das eine Bohrspitze 4 aufweist, mit den Verfahrensschritten:
- Pressen eines Stahlbolzens zum Ausformen des Schraubenkörpers 1, und
- Ausformen der Bohrspitze 4 am Vorderteil 2 aus einem Kohlenstoffstahl. Dabei wird das Vorderteil 2 nach dem Ausformen der Bohrspitze 4 an den Schraubenkörper 1 angeschweißt.

## Beschreibung

Die Erfindung betrifft ein Verfahren zur Herstellung einer Bimetallbohrschraube (Bohrschraubenherstellungsverfahren) mit einem Schraubenkörper, der einen sich an einen Schraubenkopf anschließenden Schaft aufweist, und einem Vorderteil am schraubenkopffernen Ende des Schaftes, das eine Bohrspitze aufweist, mit den Verfahrensschritten:
- Pressen eines Stahlbolzens zum Ausformen des Schraubenkörpers, und
- Ausformen der Bohrspitze am Vorderteil aus einem härtbaren Stahl.

Bohrschrauben werden zur Befestigung eines zu befestigenden Bauteiles an einem kompakten Gegenstand verwendet. Dabei muss kein Bohrloch zum Einbringen der Bohrschraube vorgebohrt werden, da die Bohrschraube mittels ihrer Bohrspitze selbst dazu geeignet ist, beim Einschrauben ein Bohrloch in das Material, z.B. Stahlprofile, in das sie eingeschraubt wird, einzubringen. Die Bohrspitze ist dabei üblicherweise aus einem gehärteten Stahl hergestellt. Die Bohrspitze weist mindestens eine Schneidkante auf und hat häufig zum Ausfördern von durch das Einbohren zerspantem Material in Längsachsenrichtung der Bohrschraube verlaufende Einkerbungen. Ein Gewindeabschnitt des Schaftes weist dabei ein Selbstschneidegewinde auf, so dass die Bohrschraube beim Einschrauben ein Gewinde in das Material einschneidet, das zur Befestigung der Bohrschraube in dem Material dient. Der Gewindeabschnitt kann dabei in seiner axialen Länge, d.h. der Länge in Längsachsenrichtung der Bohrschraube, entweder den Schaft nur teilweise überdecken oder auch den gesamten Schaft überdecken, also vom schaftseitigen Ansatz des Schraubenkopfes bis zur Bohrspitze verlaufen.

Derartige Bohrschrauben sind üblicherweise als Bimetallschrauben ausgeführt. Der Schraubenkörper wird aus einem Edelstahl, z.B. der Stahlsorte V2A oder V4A z.B. durch Pressen hergestellt, und der Vorderteil besteht aus einem härtbaren Stahl, also einem härtbaren, insbesondere niedrig legierten, kohlenstoffhaltigen Stahl, beispielsweise der Güte C-1045, also einem Kohlenstoffgehalt von 0,45 Massenprozent. Als niedrig legiert werden Stahlsorten bezeichnet, wenn mit Ausnahme von Kohlenstoff kein Legierungselement einen mittleren Gehalt von fünf Massenprozent überschreitet. Diese Konfiguration ist notwendig, da der relativ weiche Edelstahl nicht härtbar ist und deshalb eine Bohrspitze aus Edelstahl hinsichtlich ihrer Bohreigenschaften mangelhaft wäre. Deshalb wird bei der Herstellung einer derartigen Bohrschraube eine Bohrspitze aus einem härtbaren Stahl an den Schraubenkörper aus Edelstahl angeschweißt.

Üblicherweise werden derartige Bohrschrauben also unter Durchführung folgender Verfahrenschrittfolge hergestellt:
- Pressen eines Edelstahlbolzens zur Ausformung des Schraubenkörpers;
- Pressen eines Karbonstahlteils beispielsweise der Güte C-1045 zur Vorformung eines Rohlings des Vorderteils und
- Zusammenschweißen des Rohlings des Vorderteils mit dem Schraubenkörper.

Danach wird die beim Zusammenschweißen entstandene Schweißnaht entfernt, d.h. über einen gewünschten äußeren Schraubenschaftdurchmesser überstehende Schweißnahtbereiche werden entfernt.
An dem derart hergestellten Rohling der Bohrschraube wird nun die Bohrspitze durch ein Kaltverformungsverfahren, z.B. Pressen, ausgeformt und es wird ein Schraubengewinde durch Gewindewalzen auf einen Gewindeabschnitt der Bohrschraube eingeformt. Abschließend wird die Bohrschraube in einer Hochfrequenzhärtanlage gehärtet, woraufhin sie z.B. mit einer Antikorrosionsbeschichtung beschichtet werden kann.

Das Ausformen der Bohrspitze kann aufgrund dessen, dass der Rohling der Bohrschraube teilweise aus Edelstahl besteht, nur in einem Kaltverformungsarbeitsschritt durchgeführt werden. Karbonstahl beispielsweise der Güte C-1045 lässt sich jedoch nur sehr schwer kalt verformen, wodurch niedrige Werkzeugstandzeiten (hoher Verschleiß) beim Herstellen von Bohrschrauben resultieren. Weiter kann das Härten der Bohrschraube nur in einer Hochfrequenzhärtanlage durchgeführt werden, was zu hohen Produktionskosten der Bohrschrauben führt.

Der Erfindung liegt die Aufgabe zugrunde, ein Verfahren zur Herstellung einer Bohrschraube bereitzustellen, welches die Nachteile des Standes der Technik vermeidet, wobei insbesondere eine effizientere Herstellung möglich sein soll.

Diese Aufgabe wird durch die Gegenstände der Patentansprüche gelöst. Die abhängigen Ansprüche stellen bevorzugte Ausführungsformen der Erfindung dar.

Bei dem erfindungsgemäßen Verfahren zur Herstellung einer Bimetallbohrschraube mit einem Schraubenkörper, der einen sich an einen Schraubenkopf anschließenden Schaft aufweist, und einem Vorderteil aus einem Kohlenstoffstahl am schraubenkopffernen Ende des Schaftes, das eine Bohrspitze aufweist, werden die nachfolgenden Verfahrensschritte durchgeführt:
- Pressen eines Stahlbolzens zum Ausformen des Schraubenkörpers, und Ausformen der Bohrspitze am Vorderteil. Das Vorderteil besteht also aus einem härtbaren, insbesondere niedrig legierten, kohlenstoffhaltigen Stahl.

Erfindungsgemäß wird das Vorderteil erst nach dem Ausformen der Bohrspitze an den Schraubenkörper angeschweißt.

Durch die erfindungsgemäße Verfahrensschrittfolge kann eine kostengünstigere Produktion der Bimetallbohrschraube erreicht werden. Z.B. ist das Ausformen der Bohrspitze mit Stahl der Güte C1022 wesentlich günstiger als mit C1045, weil sich das Material des letztgenannten Stahls schwerer kaltverformen lässt. Deshalb ergeben sich bei der erfindungsgemäßen Vorgehensweise wesentlich höhere Werkzeugstandzeiten (geringerer Verschleiß). Mit dem erfindungsgemäßen Verfahren ist ein Härten im Durchlaufbandofen möglich, da das Vorderteil separat vom Schraubenkörper gehärtet werden kann. Der üblicherweise aus Edelstahl bestehende Schraubenkörper würde im Durchlaufbandofen Qualitätseinbusen erleiden. Das deshalb üblicherweise vorgenommene aufwändige Hochfrequenzhärten kann daher entfallen.

Beim Ausformen der Bohrspitze wird vorteilhaft mindestens eine Schneidkante und mindestens eine in Längsachsenrichtung der Bohrspitze verlaufende Einkerbung ausgebildet, so dass die derart ausgeformte Bohrspitze gute Bohreigenschaften aufweist.

Bevorzugt wird erst nach dem Anschweißen ein Schraubengewinde bevorzugt durch Gewindewalzen auf einen Gewindeabschnitt der Bohrschraube eingeformt, so dass das Gewinde beim Schweißen nicht beschädigt wird.

Wenn der Gewindeabschnitt einen Schweißnahtbereich umfasst, in dem die beim Anschweißen erzeugte Schweißnaht angeordnet ist, reicht das Gewinde teilweise in den gehärteten bzw. härtbaren Vorderteil hinein, so dass die im gehärteten bzw. härtbaren Stahl eingeformten Gewindegänge beim Einschrauben der Bimetallbohrschraube in ein Material besonders gut zum Einschneiden eines Gegengewindes in das Material geeignet sind.

Als Stahlbolzen für den Schraubenkörper wird bevorzugt ein Edelstahlbolzen verwendet, so dass die Bohrschraube gute Korrosionseigenschaften und eine ein Abbrechen erschwerende Zähigkeit aufweist.

Wenn als Kohlenstoffstahl ein Stahl der Güte C1045, d.h. Stahl mit einem Kohlenstoffgehalt von 0,45 Massenprozent, verwendet wird, wird das Härten des Vorderteils mittels einer Hochfrequenzhärtanlage vorgenommen. Das Härten kann dann nach dem Zusammenschweißen vorgenommen werden.

Wenn als Kohlenstoffstahl ein Stahl der Güte C1022, d.h. Stahl mit einem Kohlenstoffgehalt von 0,22 Massenprozent, verwendet wird, kann das Härten des Vorderteils in einem Durchlaufbandofen, d.h. durch ein Karbonitrieren, vorgenommen werden. Dann kann das Härten vor dem Zusammenschweißen vorgenommen werden.

Vorteilhaft wird vor dem Anschweißen ein Plandrehen der zum Anschweißen vorgesehenen Oberfläche (Schweißfläche) des Vorderteils vorgenommen, wodurch die Qualität der beim Schweißen erzeugten Schweißnaht erhöht werden kann. Die Härtbarkeit des Vorderteils kann vor dem Zusammenschweißen durch Aufkohlen in einem Bandofen ergänzt, d.h., begünstigt werden.

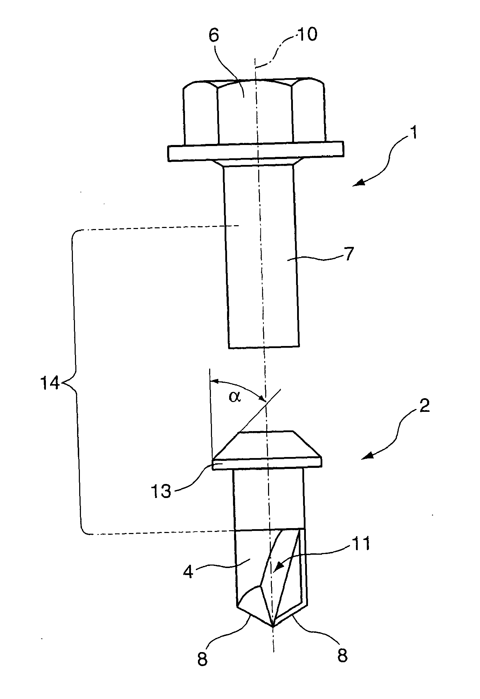

Die Erfindung wird nachfolgend anhand eines Ausführungsbeispiels unter Bezugnahme auf die Zeichnung näher erläutert.

Die Darstellungen der Zeichnung zeigen den erfindungsgemäßen Gegenstand stark schematisiert und sind nicht exakt maßstäblich zu verstehen. Die einzelnen Bestandteile des erfindungsgemäßen Gegenstandes sind so dargestellt, dass ihr Aufbau gut gezeigt werden kann.

In der Figur sind ein aus einem Edelstahlbolzen hergestellter Schraubenkörper 1 und ein aus einem Karbonstahlteil hergestellter Vorderteil 2 mit einer fertig ausgeformten Bohrspitze 4 gezeigt, bevor diese gemäß des erfindungsgemäßen Verfahrens zum Ausbilden einer Bimetallbohrschraube aneinandergeschweißt werden. Der Schraubenkörper 1 weist einen als Sechskantkopf ausgebildeten Schraubenkopf 6 und einen sich daran anschließenden Schaft 7 auf. An der Bohrspitze 4 sind Schneidkanten 8 und eine im Wesentlichen in Längsachsenrichtung 10 der Bohrspitze 4 verlaufende Einkerbung 11 ausgebildet.
Am bohrspitzenabgewandten Ende des Vorderteils 2, welches mit dem schraubenkopffernen Ende des Schraubenkörpers 1 verschweißt wird, ist eine umlaufende Wulst 13 ausgebildet, die beim Ausformen des Rohlings zur Bohrspitze 4 durch Pressen entsteht und vor einem Einformen eines Schraubengewindes z.B. durch Gewindewalzen auf einen Gewindeabschnitt 14 der Bohrschraube entfernt werden muss. Die zum Anschweißen vorgesehene Oberfläche (Schweißfläche) des Vorderteils 2, die teilweise durch den Wulst 13 ausgebildet ist, ist durch Plandrehen derart zum Anschweißen vorbereitet, dass eine umlaufende Ringfläche mit einem Winkel α von ca. 45° schräg zur Richtung der Längsachse 10 der Bohrschraube ausgebildet ist. Es versteht sich, dass auch andere Wulstformen zum Anschweißen der Bohrspitze 2 an den Stahlbolzen geeignet sind (Pilzform, Halbkugel, Kegel, usw.)
Der Bereich des Schaftes 7 und des Vorderteils 2, der als Gewindeabschnitt 14 auszubilden ist, umfasst einen Schweißnahtbereich, in dem die beim Anschweißen erzeugte Schweißnaht angeordnet ist. An dieser Schweißnaht vorhandene Unebenheiten sind ebenfalls vor dem Einformen des Schraubengewindes z.B. durch Plandrehen zu entfernen.

Die folgenden Varianten des erfindungsgemäßen Verfahrens zur Herstellung einer Bohrschraube sind besonders effizient einsetzbar.
Variante 1:
   - Pressen eines Edelstahlbolzens zum Ausformen des Schraubenkörpers;
   - Ausformen des Vorderteils durch Pressen eines C1045 Karbonstahlteils und Formen der Bohrspitze am Karbonstahlteil;
   - Pressabfall an der Bohrspitze entfernen;
   - Zusammenschweißen des Schraubenkörpers und des ausgeformten Vorderteils;
   - Entfernen der Schweißnaht, d.h. von Unebenheiten der Schweißnaht;
   - Fertigen eines Gewindes durch nachfolgendes Gewindewalzen am Schraubenkörper und Teilen des angeschweißten Vorderteils;
   - Härten der Bimetallbohrschraube mittels einer Hochfrequenzhärtanlage;
   - optional Beschichten der hergestellten Bimetallbohrschraube;
Variante 2:
   - Pressen eines Edelstahlbolzens zum Ausformen des Schraubenkörpers;
   - Ausformen des Vorderteils durch Pressen eines C1022 Karbonstahlteils und Formen der Bohrspitze am Karbonstahlteil;
   - Pressabfall an der Bohrspitze entfernen;
   - Härten des Vorderteils in einem Durchlaufofen durch Karbonitrieren;
   - Plandrehen der zum Anschweißen vorgesehenen Oberfläche (Schweißfläche) des Vorderteils;
   - Zusammenschweißen des Schraubenkörpers und des gehärteten Vorderteils;
   - Entfernen der Schweißnaht, d.h. von Unebenheiten der Schweißnaht;
   - nachfolgendes Gewindewalzen am Schraubenkörper und am Vorderteil;
   - optional Beschichten der hergestellten Bohrschraube;
Variante 3:
   - Pressen eines Edelstahlbolzens zum Ausformen des Schraubenkörpers;
   - Ausformen des Vorderteils durch Pressen eines C1045 Karbonstahlteils und Ausformen der Bohrspitze am Karbonstahlteil;
   - Zusammenschweißen des Schraubenkörpers und des ausgeformten Vorderteils;
   - Entfernen der Schweißnaht, d.h. von Unebenheiten der Schweißnaht;
   - Fertigen eines Gewindes durch Gewindewalzen am Schraubenkörper und an Teilen des Vorderteils mit gleichzeitigem Entfernen des Pressabfalls an der Bohrspitze;
   - Härten der Bimetallbohrschraube mittels einer Hochfrequenzhärtanlage;
   - optional Beschichten der hergestellten Bimetallbohrschraube;
Variante 4:
   - Pressen eines Edelstahlbolzens zum Ausformen des Schraubenkörpers;
   - Ausformen des Vorderteils durch Pressen eines C1022 Karbonstahlteils und ausformen der Bohrspitze am Karbonstahlteil;
   - Pressabfall an der Bohrspitze entfernen;
   - Aufkohlen des ausgeformten Vorderteils in einem Bandofen;
   - Plandrehen der zum Anschweißen vorgesehenen Oberfläche (Schweißfläche) des Vorderteils;
   - Zusammenschweißen des Schraubenkörpers und des aufgekohlten Vorderteils;
   - Entfernen der Schweißnaht, d.h. von Unebenheiten der Schweißnaht;
   - Fertigen eines Gewindes durch Gewindewalzen am Schraubenkörper und Teilen des Vorderteils;
   - Härten des Bimetallbohrschraube mittels einer Hochfrequenzhärtanlage;
   - optional Beschichten der hergestellten Bimetallbohrschraube;

Vorgeschlagen wird ein Verfahren zur Herstellung einer Bimetallbohrschraube mit einem Schraubenkörper 1, der einen sich an einen Schraubenkopf 6 anschließenden Schaft 7 aufweist, und einem Vorderteil 2 am schraubenkopffernen Ende des Schaftes 7, das eine Bohrspitze 4 aufweist, mit den Verfahrensschritten:
- Pressen eines Stahlbolzens zum Ausformen des Schraubenkörpers 1, und
- Ausformen der Bohrspitze 4 am Vorderteil 2 aus einem Kohlenstoffstahl. Dabei wird das Vorderteil 2 nach dem Ausformen der Bohrspitze 4 an den Schraubenkörper 1 angeschweißt.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Herstellung einer Bimetallbohrschraube mit
einem Schraubenkörper (1), der einen sich an einen Schraubenkopf (6) anschließenden Schaft (7) aufweist, und einem Vorderteil (2) am schraubenkopffernen Ende des Schaftes (7), das eine Bohrspitze (4) aufweist, mit den Verfahrensschritten:
- Pressen eines Stahlbolzens zum Ausformen des Schraubenkörpers (1), und
- Ausformen der Bohrspitze (4) am Vorderteil (2) aus einem härtbaren Stahl,
**dadurch gekennzeichnet, dass**
das Vorderteil (2) nach dem Ausformen der Bohrspitze (4) an den Schraubenkörper (1) angeschweißt wird.

2. Verfahren nach Anspruch 1,
**dadurch gekennzeichnet, dass**
beim Ausformen der Bohrspitze (4) mindestens eine Schneidkante (8) und mindestens eine in Längsachsenrichtung der Bohrspitze (4) verlaufende Einkerbung (11) ausgebildet werden.

3. Verfahren nach einem der Ansprüche 1 bis 2,
**dadurch gekennzeichnet, dass**
nach dem Anschweißen ein Schraubengewinde bevorzugt durch Gewindewalzen auf einen Gewindeabschnitt (14) der Bohrschraube eingeformt wird.

4. Verfahren nach Anspruch 3,
**dadurch gekennzeichnet, dass**
der Gewindeabschnitt (14) einen Schweißnahtbereich umfasst, in dem die beim Anschweißen erzeugte Schweißnaht angeordnet ist.

5. Verfahren nach einem der Ansprüche 1 bis 4,
**dadurch gekennzeichnet, dass**
als Stahlbolzen ein Edelstahlbolzen verwendet wird.

6. Verfahren nach einem der Ansprüche 1 bis 5,
**dadurch gekennzeichnet, dass**
als härtbarer Stahl ein Stahl der Güte C1045 verwendet wird und dass ein Härten des Vorderteils (2) mittels einer Hochfrequenzhärtanlage vorgenommen wird.

7. Verfahren nach Anspruch 6,
**dadurch gekennzeichnet, dass**
das Härten nach dem Zusammenschweißen vorgenommen wird.

8. Verfahren nach einem der Ansprüche 1 bis 5,
**dadurch gekennzeichnet, dass**
als härtbarer Stahl ein Stahl der Güte C1022 verwendet wird und dass ein Härten des Vorderteils (2) in einem Durchlaufbandofen vorgenommen wird.

9. Verfahren nach Anspruch 8,
**dadurch gekennzeichnet, dass**
das Härten vor dem Zusammenschweißen vorgenommen wird.

10. Verfahren nach einem der Ansprüche 1 bis 9,
**dadurch gekennzeichnet, dass**
vor dem Anschweißen ein Plandrehen der zum Anschweißen vorgesehenen Oberfläche des Vorderteils (2) und/oder ein Aufkohlen des Vorderteils (2) in einem Bandofen vorgenommen wird.
